# EUROPEAN PATENT SPECIFICATION

(11) **EP 0 706 913 B1**
(45) Date of publication and mention of the grant of the patent: **30.06.1999**
(21) Application number: 95830414.9
(22) Date of filing: 04.10.1995
(51) Int. Cl.: B60R 13/10

(54) **Universal number plate holder**
Universelle Kennzeichenschild-Halterung
Attache universelle pour plaque minéralogique

(30) Priority: 12.10.1994 IT RM940651
(43) Date of publication of application: 17.04.1996
(73) Proprietor: Borri, Giuliana, 00041 Albano Laziale (Roma) (IT)
(72) Inventor: Borri, Giuliana, 00041 Albano Laziale (Roma) (IT)
(74) Representative: Iannone, Carlo Luigi

(56) References cited:
- DE-A- 2 930 182
- DE-A- 4 105 172
- DE-U- 8 714 331
- DE-U- 8 912 580
- DE-U- 9 108 165

## Description

The present invention relates to an universal number plate holder.

More particularly, the invention relates to a number plate holder realised in such a way to be possible to mount it on any kind of vehicle and to form an optimum support for the number plate.

At present, the number plate holders are substantially made up of a metal support which is coupled to the vehicle and upon which the number plate is placed.

In the very new solutions, the metallic support has a determined thickness or depth so as to allow the mounting of the number plate on any kind of vehicle.

Further, in order to be suitable for any kind, or almost any kind, of vehicle, it provides various slots and holes that should correspond to any kind of coupling provided on the same vehicle.

The first drawback of the number plate holders presently used is that, although many efforts have been done to avoid this, they are never suitable for any kind of known vehicles, so that in some cases they require little modifications to conform to the vehicle.

Furthermore, the fact that they are mainly realised by metal, since they are interposed between the metal of the body and the metal of the number plate, determines a transmission of vibrations that could cause detrimental and troublesome effects.

Another problem connected with the known number plate holders is due to the fact that the number plate is laterally inserted within the support already fixed to the body of the vehicle. In many cases, the seat for the number plate holder is built in the body of the vehicle, so that the insertion operation of the number plate is difficult and requires the flexion of the same number plate.

Further, the last kind of number plates are realised as a sole part, so that their coupling to the support cannot be limited to the four lateral points, and it is necessary to provide also central reinforcing folded seams.

Moreover, the frame has essentially an aesthetical finishing role, and is silk printed, or not, on the basis of the client requests, being it necessary to personalise it each time, with high realisation and storing costs.

Furthermore, when the frame is not silk printed, the lower side has the same height of the other sides, while when it is silk printed, the lower side must have a greater height than the other sides.

As to the silk printing, being the metallic frame realised of a determined colour, in order to satisfy particular needing of the car distributor about the colour of the same frame, it is necessary to make the silk printing by different runs, with the consequent increase of the costs.

DE-U-8,714,331 describes a number plate holder, closed along the periphery of the number plate, by which the fixing points cannot be individuated after the fixing of the holder to the car body. Moreover, the solution described in this document allows to remove the number plate holder only knowing exactly the fixing points employing a specific tool.

DE-U-8,912,580 describes a number plate holder providing portions to place advertising and having a rear wall with projecting lateral walls, on the rear wall a plurality of fixing openings being provided, and projecting surfaces for supporting the rear side of the number plate being provided.

A universal number plate holder according to the preamble of claim 1 is known from DE-A-4 105 172.

In view of the above, the Applicant has realised and prepared a new structure for an universal number plate holder, realised employing plastic material, the support of which is symmetrical both with respect to its vertical axis and with respect to the horizontal axis, and it is so structured to be adopted on any kind of vehicle.

Further, the solution proposed according to the invention provides a frame not having only an aesthetical function, but that also forms the number plate support, so that the problems connected with the introduction of the number plate and those due to the provision of a central stiffening of the number plate fixing are avoided.

Moreover, the frame of the number plate holder according to the invention can be also used alone as number plate holder, without using the symmetrical support, for those cars, e.g. the FIAT models, allowing the direct mounting.

A further advantage deriving from the solution proposed according to the present invention is the one relevant to the fact that the frame provides the lower (or upper) side detachable, in order to introduce the number plate holder, said introduction not occurring laterally but from below (or from the above) and before the coupling to the vehicle.

Consequently, it is possible to screen print as wished the detachable side of the frame, the other parts of the frame remaining always the same, so that the car distributor will have to personalise, and therefore to store, only one element of the same frame, with the consequent safe of costs and encumber.

Moreover, being it possible to make the number plate holder according to the invention of any colour, also the screen printing costs will be reduced.

Further, in case it is preferred the not personalised number plate holder, it is sufficient to adopt the detachable side smooth and with a reduced height, without being it necessary to completely change the frame.

Therefore, the solution proposed according to the present invention allows to obtain remarkable advantages also about the production and storage by the manufacturer and by the car distributor.

It is therefore specific object of the present invention an universal number plate holder comprising:
- a support element connectable to the vehicle, substantially symmetrical both with respect to its longitudinal axis and with respect to its transversal axis, the support element is provided with two windows longitudinally placed with respect to the transversal axis, whereby in each one of said windows a slidable, elongated element with means for fixing the support element to the vehicle is provided,
- a frame having coupling means for coupling with said support element, characterized in that, the support element further comprises:
- a plurality of holes for fixing the support element to the vehicle, and
- holes for fixing the number plate to the support element;
   the elongated element is slidable in the transverse direction, and the frame is made up of one flame element, wherein the number plate is transversely introduced, and of a stick element closing the number plate introduction side, said frame element and said stick element being connectable to each other, said flame having holes for fixing the number plate corresponding to said holes provided on said support element.

Preferably, according to the invention, the number plate holder is made up of plastic material.

Still according to the invention, said elongated element vertically slidable along said windows provides a horizontal slot and said means for the fixing to the vehicle are made up of a plate, horizontally slidable on said elongated element and centrally provided with a hole.

Still according to the invention, said plurality of holes for fixing the support element to the vehicle comprises four groups of three slotted holes, symmetrically provided with respect to the geometrical centre of the support element, and two slotted holes provided at the ends of the horizontal axis of the same support element.

Further, according to the invention, said holes for the fixing of the number plate to the vehicle and the corresponding holes on said frame, are made up of four groups of three holes, provided on the corners of the support element and of the frame, and provided in such a way to correspond with the holes on the number plate whichever is the orientation of the support element, of the frame and of the number plate.

Always according to the invention, the coupling between said frame and said closure stick element of the frame occurs by fixed joint.

Said means for the fixing of the frame on said support element will be preferably made up of snap driftpins.

Further, according to the invention, said closure stick element can have the same width or a different width with respect to the other sides of the frame element.

The invention further includes a support frame for a number plate directly connectable to the vehicle, made up of a frame element, wherein the number plate is transversely introduced, and of a stick element closing the number plate introduction side, said frame element and said stick element being connectable each other, as well as holes for the fixing of the number plate.

The present invention will be now described for illustrative but not limitative purposes according to its preferred embodiments with particular reference to the figures of the enclosed drawings, wherein:
figure 1 is a plan view of an embodiment of the support of the number plate holder according to the invention;
figure 2 is an exploded view of the frame of the number plate holder according to the invention; and
figure 3 is a lateral exploded view of the number plate holder according to the invention.

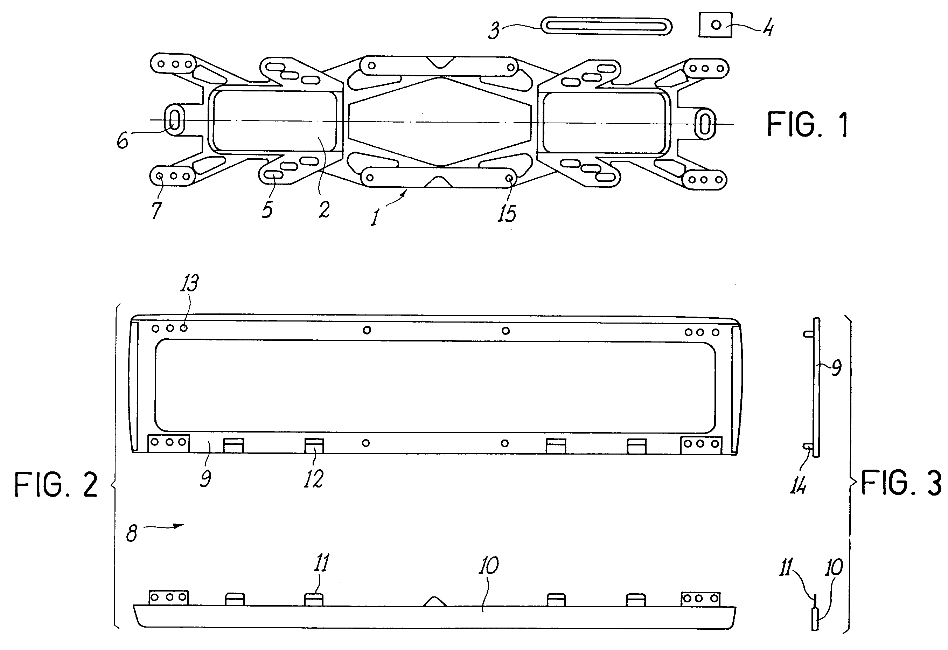

Referring first to figure 1, the support 1 of the number plate holder according to the invention is shown, said support 1 being coupled to the vehicle (not shown).

Said support 1 is perfectly symmetrical both with respect to the vertical axis and with respect to the horizontal axis.

It provides two windows 2 along which two elongated elements 3, centrally provided with a slot, slide in a horizontal direction, along said elongated elements 3 a little plate 4 sliding, said plate 4 being provided with a hole allowing its coupling to the vehicle.

Further, on each quarter of the support 1, three slotted holes 5 are provided, also these holes being used for the coupling to the vehicle.

Moreover, two further lateral slotted holes 6 are provided.

The assembly comprising the windows 2, with the elongated elements 3 and the little plate 4, the holes 5 and the holes 6 is realised in such a way to provide an extremely wide combination of possibilities of fixing points, so as to comprise all the fixing solutions for all the kind of vehicles.

Three holes 7 are provided on each of the four corners of the support 1, said holes being offset in such a way to allow the use of the support 1 without paying attention to its orientation, also in view of the fact that, as it is known, the number plates are provided of asymmetrical fixing points.

Therefore, the support 1 of the number plate holder according to the invention is absolutely universal and perfectly symmetrical both with respect to the horizontal axis and to the vertical axis, so as to avoid any problem during the assembling.

Coming now to observe figures 2 and 3, the frame 8 of the number plate holder according to the invention is shown, said frame comprising a frame part 9 and a closure stick 10.

The frame 9 has a lateral side which forms a ledge for the number plate on the side opened by the closure stick 10, said number plate being introduced from the bottom.

After the introduction of the number plate, the stick 10 is coupled to the frame part 9 by the fixed joints 11 and the relevant seats 12.

On the frame 8 thus assembled, holes 13 corresponding to the support holes 7 are provided on the four corners.

Said holes 7 and said holes 13 will always correspond with the holes provided on the number plate, whichever is the orientation of the number plate, of the support 1 and of the frame 8.

As it can be seen from figure 3, the frame part 9 is provided with four snapping driftpins 14 which couple with the corresponding holes 15 realised on the central part of the support 1.

The stick 10 allows to silk print any kind of writing and, in view of the fact that it is separated from the frame part 9, drastically reduces the costs and the storing problems.

Furthermore, its height can be varied and can correspond to the height of the other sides of the frame in case the silk printing is not wished.

The mounting of the Number plate holder according to the invention is extremely simple.

The support 1 is fixed on the vehicle by the holes 5 or 5 or the window 2, elongated element 3, little plate 4 assembly, the choice being a function of the model.

The number plate is introduced in the frame part 9 and the closure stick 10 is applied.

Now, by the snapping driftpins 14, the assembled frame 8 is coupled to the support 1 and finally the whole assembly is locked by rivets or other system through the holes 7 and 13.

In case the model of vehicles permits this solution, it is also possible to mount directly the frame 8 on the vehicle without the need of using the support 1. This solution is particularly valid for the FIAT models.

In this case, the frame 8 will be not provided with the snapping driftpins 14.

The present invention has been described for illustrative but not limitative purposes according to its preferred embodiments, but it is to be understood that modifications and/or changes can be introduced by those skilled in the art without departing from the relevant scope as defined by the enclosed claims.

## Claims

1. Universal number plate holder comprising:
- a support element (1) connectable to the vehicle, substantially symmetrical both with respect to its longitudinal axis and with respect to its transversal axis, the support element(1)is provided with two windows (2) longitudinally placed with respect to the transversal axis, whereby in each one of said windows (2) a slidable, elongated element (3) with means (4)for fixing the support element (1) to the vehicle is provided,
- a frame (8) having coupling means (12) for coupling with said support element (1), **characterized in that**,
the support element further comprises:
- a plurality of holes (5,6) for fixing the support element (1) to the vehicle, and
- holes (7) for fixing the number plate to the support element (1); the elongated element (3) is slidable in the transverse direction; and the frame (8) is made up of one frame element (9), wherein the number plate is transversely introduced, and of a stick element (10) closing the number plate introduction side, said frame element (9) and said stick element (10) being connectable to each other, said frame (8) having holes (13) for fixing the number plate corresponding to said holes (7) provided on said support element (1).

2. Universal number plate holder according to claim 1, characterised in that the number plate holder is made up of plastic material.

3. Universal number plate holder according to one of the preceding claim, characterised in that said elongated element (3) vertically slidable along said windows (2) provides a horizontal slot and said means (4) for the fixing to the vehicle are made up of a plate, horizontally slidable on said element (3) and centrally provided with a hole.

4. Universal number plate holder according to one of the preceding claim, characterised in that said plurality of holes (5,&) for fixing the support element (1) to the vehicle comprises four groups (5) of three slotted holes, symmetrically provided with respect to the geometrical centre of the support element (1), and two slotted holes (6) provided at the ends of the horizontal axis of the same support element (1).

5. Universal number plate holder according to one of the preceding claim, characterised in that said holes (7) for the fixing of the number plate to the vehicle and the corresponding holes (13) on said frame (7), are made up of four groups of three holes, provided on the comers of the support element (1) and of the frame (9), and provided in such a way to correspond with the holes on the number plate whichever is the orientation of the support element, of the frame and of the number plate.

6. Universal number plate holder according to one of the preceding claim, characterised in that the coupling between said frame (9) and said closure stick element (10) of the frame occurs by fixed joint (11,12).

7. Universal number plate holder according to one of the preceding claim, characterised in that said means for the fixing of the frame (9) on said support element (1) will be preferably made up of snap driftpins (14).

8. Universal number plate holder according to one of the preceding claim, characterised in that said closure stick element (10) has the same width or a different width with respect to the other sides of the frame element.

9. Support frame for a number plate characterised in that it is directly connectable to the vehicle, and in that it is made up of a frame element (9), wherein the number plate is transversely introduced, and of a stick element (10) closing the number plate introduction side, said frame element (9) and said stick element (10) being connectable to each other, as well as holes (13) for the fixing of the number plate.

10. Support frame for a number plate according to claim 9, characterised in that said holes (13) for fixing the number plate to the vehicle comprises four groups of three slotted holes, provided on the corners of the frame, and provided in such a way to correspond with the holes on the number plate with any orientation of the frame and of the number plate.

11. Support frame for a number plate according to claim 9, characterised in that the coupling between said frame (9) and said closure stick element (10) of the frame occurs by fixed joint.

12. Support frame for a number plate according to one of the claims 9 - 11, characterised in that said closure stick element (10) has the same width or a different width with respect to the other sides of the frame element.

## Patentansprüche

1. Universelle Kennzeichenschild-Halterung enthaltend:
- ein mit dem Fahrzung verbindbares und zur Quer- und Längsachse wesentlich symmetrisches Trageglied (1), wobei das Trageglied (1) mit zwei zur Querachse längsweise angeordneten Fenstern (2) versehen ist und in jedem Fenster (2) ein längliches Stück (3) angeordnet ist, welches Mittel (4) zur befestigung des Tragegliedes (1) an das Fahrzeug aufweist;
- einen Rahmen (8) mit Kupplungsmitteln (12) zur Kupplung mit dem vorgenannten Trageteil (1) enthält;
dadurch gekennzeichnet, dass der Trageteil ausserdem:
- eine Mehrzahl von Löchern zur Befestigung des Trageteils (1) an das Fahrzeug und
- Löcher zur Befestigung des Kennzeichenschildes an den Trageteil (1);
wobei das längliche Stück in Querrichtung gleitbar ist und der Rahmen (8) aus einem Rahmenteil (9), worin das Kennzeichenschild querweise eingeführt ist und einem die Einführungsseite des Kennzeichenschildes verschliessenden stabförmigen Glied (10) ausgebildet ist und wobei der vorgenannten Rahmenteil (9) und das vorgenannte stabförmige Glied (10) miteinander verbindbar sind und der vorgenannte Rahmen (8) Löcher (13) aufweist, die zur Befestigung des Kennzeichenschildes dienen und zu den vorgenannten am vorgenannten Trageteil (1) vorgesehen Löchern (7) entsprechend angeordnet ist.

2. Universelle Kennzeichenschild-Halterung nach Anspruch 1, dadurch gekennzeichnet, dass die Kennzeichenschild-Halberung aus Kunnststoff besteht.

3. Universelle Kennzeichenschild-Halterung nach je einem der vorhergehenden Ansprüche, dadurch gekennzeichnet, dass das vorgenannte längliche, längs der vorgenannten Fenster (2) gleitbare Stück (3) einen waagerechten Schlitz bildet und die vorgenannten Mittel (4) zur befestigung an das Fahrzeug aus einer Platte bestehen, die auf dem vorgenannten Stück waagerecht angeordnet ist und ein Mittelloch aufweist.

4. Universelle Kennzeichenschild-Halterung nach je einem der vorhergehenden Ansprüche, dadurch gekennzeichnet, dass die vorgenannte Mehrzahl von Löcher (5,6) zur Befestigung des Trageteiles (1) and das Fahrzeug, aus vier Gruppen (5) von je drei Löchern, die zur geometrischen Miteel des Trageteiles (1) symmetrisch angeodnet sind und aus zwei schlitzförmigen, an das den Enden der waagerechten Achse des Trageteiles (1) selbst vorgesehenen Löchern, gebildet ist.

5. Universelle Kennzeichenschild-Halterung nach je einem der vorhergehenden Ansprüche, dadurch gekennzeichnet, dass die vorgenannten Löcher zur Befestigung des Kennzeichenschildes and das Fahrzeug und die entsprechenden Löcher (13) am vorgenannten Rahmen aus vier Gruppen von je drei Löchern bestehen, die an den Ecken des Trageteiles (1) und des Rahmens (9) so angeordnent sind, dass sie bei jeder Ausrichtung des Trageteiles, des Rahmens und des Kennzeichenschildes mit den Löchern dieses Schildes übereinstimmen.

6. Universelle Kennzeichenschild-Halterung nach je einem der vorhergehenden Ansprüche, dadurch gekennzeichnet, dass die Kupplung zwischen dem Rahmen (9) und dem stabförmigen Abdeckglied (10) des Rahmens aus einer ortsfesten Verbindung besteht.

7. Universelle Kennzeichenschild-Halterung nach je einem der vorhergehenden Ansprüche, dadurch gekennzeichnet, dass die vorgenannten Mittel zur Befestigung des Rahmens (9) auf dem Tragteil (1) vorzugsweise aus Raststiften bestehen.

8. Universelle Kennzeichenschild-Halterung nach je einem der vorhergehenden Ansprüche, dadurch gekennzeichnet, dass das vorgenannte stabförmige Abdeckglied (10) gegenüber den anderen Seiten des Rahmenteils eine gleiche oder unterschiedliche Dicke hat.

9. Tragerahmen für ein Kennzeichenschild, dadurch gekennzeichnet, dass er unmittelbar an das Fahrzeug anbringbar ist und aus einem Rahmenteil (9), in welchen das Kennzeichenschild querweise eingeführt wird, und aus einem die Einführungsseite des Kennzeichenschildes verschliessenden stabförmigen Glied (10) ausgebeildet ist, wobei der Rahmenteil (9) und das stabförmigen Glied (1) miteinander verbindbar sind und Löcher (13) zur Befestigung des Kennzeichenschildes vorgesehen sind.

10. Tragerahmen für ein Kennzeichenschild nach Anspruch 9, dadurch gekennzeichnet, dass die vorgenannten Löcher zur Befestigung des Kennzeichenschildes an das Fahrzeug aus vier Gruppen von je drei schlitzförmigen Löchern bestehen, die an den Ecken des Rahmens so angeordnet sind, dass sie mit den Löchern am Kennzeichenschild bei jeder Ausrichtung des Rahmen und des Kennzeichenschildes übereinstimmen.

11. Tragerahmen für ein Kennzeichenschild nach Anspruch 9, dadurch gekennzeichnet, dass die Kupplung zwischen dem vorgenannten Rahmen (9) und dem vorgenannten stabförmigen Abdeckglied (10) des Rahmens aus einer ortsfesten Verbindung besteht.

12. Tragerahmen für ein Kennzeichenschild nach den Ansprüchen 9 bis 11, dadurch gekennzeichnet, dass das vorgenannte stabförmigen Abdeckglied (10) gegenüber den anderen Seiten des Rahmenteiles eine gleiche oder unterschiedliche Dicke hat.

## Revendications

1. Attache universelle pour plaque minéralogique, comprenant:
- un élément de support (1) apte à être joint au véhicle, sensiblement symétriquement à son axe longitudinale et à son axe transversale, l'élément de support étant muni de deux fenêtres (2) placées longitudinalement à l'axe transversale, dans chacune desdites fenêtres (2) un élément oblong roulant (3) étant prévu avec des moyens (4) pour abloquer l'élément de support (1) au véhicule;
- un châssis (8) ayant des moyens de couplage (12) pour l'accouplement avec ledit élément de support (1), caractérisé en ce que l'élément de support comprend en outre:
- une pluralité de trous (5, 6) pour abloquer l'élément de support au véhicule et
- trous (7) pour abloquer la plaque minéralogique à l'élément de support (1);
l'élément oblong (3) est coulissant en direction transversale et le châssis (8) comprend un élément à châssis (9), dans lequel la plaque minéralogique est introduit transversalement et un élément à barre (10) qui ferme le côté d'introduction de la plaque minéralogique, ledit élément à châssis (9) et ledit élément à barre (10) étant aptes à être joints l'un à l'autre, ledit châssis (8) ayant des trous (13) pour fixer la plaque minéralogique, correspondants audits trous (7) prevus dans ledit élément de support (1).

2. Attache universelle pour plaque minéralogique selon la revendication 1, charactérisé en ce que la plaque minéralogique est faite de matière plastique.

3. Attache universelle pour plaque minéralogique selon l'une des revendications précedéntes, caractérisée en ce que ledit élément oblong (3), coulissant le long desdites fenêtres (2) a un fente horizontale et lesdits moyens (4) pour l'ablocage à la voiture consistent d'une plaque coulissante horizontalement sur ledit élément (3) et munie d'un trous centrale.

4. Attache universelle pour plaque minéralogique selon l'une des revendications précedéntes, caractérisée en ce que ladite pluralité des trous (5, 6), pour fixer l'élément de support (1) au véhicle, comprend quatre groupes de trois trous à fente, place symétriquement par rapport au centre géométrique de l'élément de support (1) et deux trous à fente (6) prévus aux extrémités de l'axe horizontal de l'élément de support même (1).

5. Attache universelle pour plaque minéralogique selon l'une des revendications précedéntes, caractérisée en ce que lesdits trous (7) pour abloquer ladite plaque minéralogique au véhicle et les trous correspondants (13) sur ledit châssis (7) consistent des quatre groupes des trois trous prévus sur les angles de l'élément de support (1) et du châssis (9) de façon à correspondre aux trous de la plaque minéralogique, indépendamment de l'orientation de l'élément de support, du châssis et de la plaque minéralogique.

6. Attache universelle pour plaque minéralogique selon l'une des revendications précedéntes, caractérisée en ce que l'accouplage entre ledit châssis (9) et ledit élément de fermetur à barre (10) dudit châssis est fait par joints fixes (11, 12).

7. Attache universelle pour plaque minéralogique selon l'une des revendications précedéntes, caractérisée en ce que lesdits moyens pour fixer le châssis (9) sur ledit élément de support consistent préférablement des goupilles d'endiquetage (14).

8. Attache universelle pour plaque minéralogique selon l'une des revendications précedéntes, caractérisée en ce que ledit élément de fermeture à barre (10) a la largeur égale ou différent par rapport à les autres côtés de l'élément à châssis.

9. Châssis de support pour une plaque minéralogique, caractérisé en ce qu'il est applicable directement au véhicule et est realisé d'un élément à châssis (9), dans lequel la plaque minéralogique est introduite transversalement et d'un élément à barre (10) fermant le côté d'introduction de la plaque minéralogique, ledit élément à châssis (9) et ledit élément à barre (10 étant aptes d'être joint l'un à l'autre, ainsi que des trous (13) pour abloquer la plaque minéralogique.

10. Châssis de support pour une plaque minéralogique selon la revendication 9, caractérisé en ce que lesdits trous (13) pour abloquer la plaque minéralogique au véhicule comprendent quatre groupes des trois trous à fente, prévus sur les angles du châssis de façon à correspondre aux trous sur la plaque minéralogique en chaque orientation du châssis et de la plaque minéralogique.

11. Châssis de support pour une plaque minéralogique selon la revendication 9, caractérisé en ce que l'accouplage entre ledit châssis (9) et ledit élément à barre (10) de fermature du châssis à lieu par des joints fixes.

12. Châssis de support pour une plaque minéralogique selon l'une des revendications 9-11, caractérisé en ce que ledit élément à barre de fermature (10) a une largeur égale ou différent par rapport à les autre côtés de l'élément à châssis.
